**Europäisches Patentamt**

**European Patent Office**

**Office européen des brevets**

(11) Veröffentlichungsnummer: **0 254 868 B1**

# (12) EUROPÄISCHE PATENTSCHRIFT

(45) Veröffentlichungstag der Patentschrift: **08.05.91**

(51) Int. Cl.⁵: **F16J 15/48**

(21) Anmeldenummer: **87109018.9**

(22) Anmeldetag: **23.06.87**

(54) **Abdichtverfahren.**

(30) Priorität: **01.08.86 DE 3626157**

(43) Veröffentlichungstag der Anmeldung:
**03.02.88 Patentblatt 88/05**

(45) Bekanntmachung des Hinweises auf die
Patenterteilung:
**08.05.91 Patentblatt 91/19**

(84) Benannte Vertragsstaaten:
**AT BE CH DE ES FR GB IT LI NL SE**

(56) Entgegenhaltungen:
**FR-A- 1 431 467**
**GB-A- 2 054 095**

(73) Patentinhaber: **Wankel, Felix, Dr. h.c.**
**Fraunhoferstrasse 10**
**W-8990 Lindau(DE)**

(72) Erfinder: **Wankel, Felix, Dr. h.c.**
**Fraunhoferstrasse 10**
**W-8990 Lindau(DE)**

(74) Vertreter: **Quehl, Horst M., Dipl.-Ing.**
**Seestrasse 640 Postfach 90**
**CH-8706 Meilen/Zürich(CH)**

## Beschreibung

Die Erfindung betrifft ein Verfahren zur Abdichtung zwischen relativ zueinander bewegten Maschinenteilen mittels eines in einem der Maschinenteile beweglich gehaltenen Dichtteiles, bei wechselnden Drücken.

Für die Abdichtung entlang von ununterbrochen verlaufenden Dichtflächen, z.B. an der Zylinderfläche einer Hubkolbenmaschine oder der Gehäuseinnenfläche einer Rotationskolbenmaschine, wird bei bekannten Verfahren dieser Art das Dichtteil durch Federkraft dauernd gegen die Dichtfläche gedrückt, obwohl bei Maschinen mit bis auf Unterdruck wechselnden Drükken des abzudichtenden Mediums eine dauernde vollständige Annäherung des Dichtteiles bzw. ein Andruck nicht erforderlich wäre. Der Andruck des Dichtteiles führt zu Reibungsverlusten und Abstreifen der Schmierflüssigkeit von der Dichtfläche.

Für die Abdichtung mittels Dichtleisten an Rotationskolben maschinen mit unterbrochenen Dichtflächen wurde bereits vorgeschlagen, die Dichtleisten in ihrem Schwerpunkt zu lagern. Da diese jedoch gegen die Dichtfläche gedrückt werden, bewegen sie sich an den Unterbrechungen der Dichtfläche etwas nach aussen, so dass bei erneutem Kontakt mit einer Dichtfläche mechanische Beanspruchungen auftreten oder eine aufwendige mechanische Steuerung der Dichtleisten erforderlich wäre (US-A- 4,296,936).

Durch die FR-A-1 431 467 (DE-A-1 450 275) ist weiterhin eine Dichtungskonstruktion bekannt, deren drehbar gehaltene Dichtleiste sich unter dem Differenzdruck im durchströmten Dichtspalt entgegen einer in Drehrichtung wirkenden Federkraft in ein Position einpendelt, in der sich ein Ende eines halbkreisförmigen Dichtleistenquerschnittes in dichtspaltbildender Annäherung an der Dichtfläche befindet. Eine Anlage der Dichtleiste an der Dichtfläche unter dem vollen Druck des abzudichtenden Mediums ist mittels dieser Dichtungskonstruktion jedoch nicht möglich.

Der Erfindung liegt die Aufgabe zugrunde, ein Verfahren der genannten Art zu finden, durch das auf einfache Weise die Bewegung eines Dichtteiles zwischen einer von der Dichtfläche abgehobenen Position und einer Anlageposition an der Dichtfläche im Moment der Entwicklung eines wesentlichen Ueberdruckes im abzudichtenden Raum gesteuert werden kann. Die Lösung dieser Aufgabe erfolgt dadurch, dass das beweg liche Dichtteil im differenzdrucklosen Zustand mit einer begrenzten Kraft von der gegenüberliegenden Dichtfläche abgehoben gehalten wird und das Anlegen des Dichtteiles an die Dichtfläche durch eine beim kurzzeitigen Durchströmen des Dichtspaltes an der Laufseite des Dichtteiles wirkende Druck verminderung und den unverminderten Druck aus dem abzudichtenden Raum oder der Atmosphäre erfolgt. Eine Abdichtung zur Durchführung des erfindungsgemässen Verfahrens hat entspre chend eine Einrichtung, beispielsweise eine Feder, magnetische oder hydraulische Mittel o.dgl. zur Abhebung und Halterung des Dichtteiles mit einer begrenzten Kraft in geringem Abstand von der dem Dichtteil gegenüberliegenden Dichtfläche. Die Halterung und Abhebung kann jedoch auch allein durch die Schwerkraftwirkung erreicht werden, so dass hierfür nicht unbedingt besondere Mittel erforderlich sind.

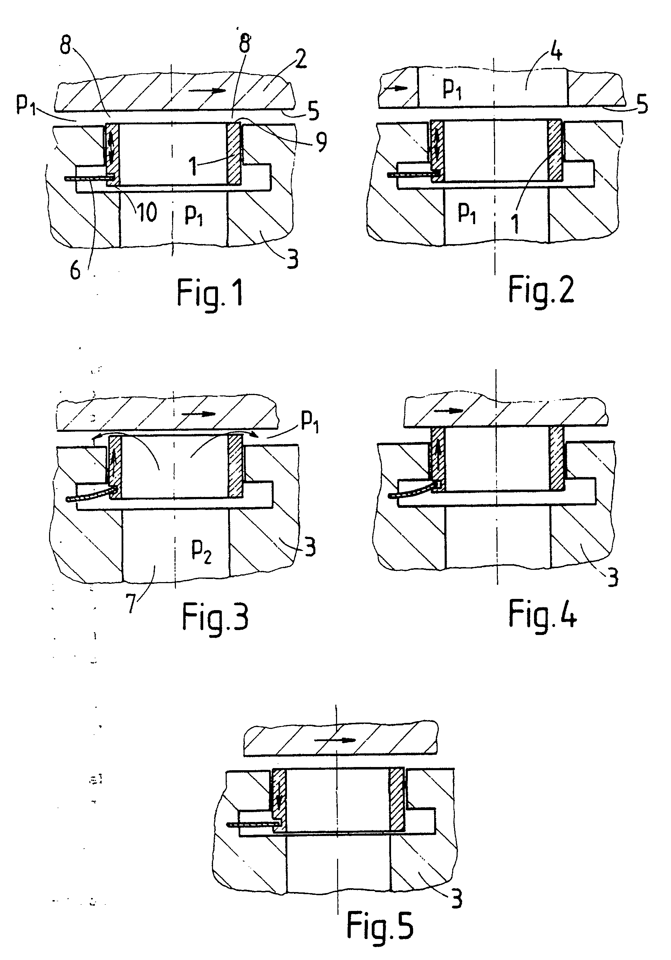

Zum besseren Verständnis der Erfindung wird auf die schematischen zeichnerischen Darstellungen von Versuchsanordnungen gemäss der Erfindung hingewiesen. Diese zeigen Querschnitte im Bereich eines Dichtteiles 1 der beiden relativ zueinander bewegten Maschinenteile 2 und 3. Dabei zeigen die Fig.1 bis 5 aufeinanderfolgende Bewegungsphasen einer Dichtanordnung. Das Maschinenteil 2 entspricht beispielsweise dem Drehschieber einer Drehschiebersteuerung einer Verbrennungskraftmaschine, so dass es sich mit konstantem Abstand quer zu dem ortsfesten Maschinenteil 3 bewegt, das entsprechend den Zylinderkopf der Maschine darstellt. In der Position nach Fig.2 befindet sich die Steueröffnung 4 direkt gegenüberliegend zu dem beweglich, d.h. verschiebbar, in dem Maschinenteil 3 gehaltenen Dichtring 1.

Gemäss dem Stand der Technik mit konstanter Anpressung des Dichtringes gegen die Dichtfläche 5 wäre es erforderlich, die Steueröffnung 4 kleiner auszubilden als den Dichtring 1, damit dieser nicht in die Steueröffnung hineingeschoben wird. Erfindungsgemäss wird jedoch der Dichtring 1 im differenzdrucklosen Zustand entsprechend den Darstellungen in Fig.1 und 2 durch die Blattfeder 6 in geringem Abstand von der Dichtfläche 5 gehalten.

Bei plötzlichem Druckanstieg im abzudichtenden Kanal 7 von $p_1$ auf $p_2$ strömt das abzudichtende Medium, z.B. Verbrennungsgas, kurzzeitig durch den Ringspalt 8 zwischen der Laufdichtfläche 9 des Dichtringes 1 und der Dichtfläche 5 ab, so dass in diesem Spalt 8 aufgrund des Strömungsgesetzes von Bernoulli ein Unterdruck entsteht, bei gleichzeitigem Ueberdruck $p_2$ an der Schubseite 10 des Dichtringes 1. Dies ist in Fig.3 veranschaulicht. Die resultierende Kraft drückt den Dichtring 1 schnell in dichtende Position gegen die Dichtfläche 5, wie Fig.4 zeigt. Fig.5 zeigt die Rückkehr des Dichtringes 1 in seine abgehobene Position.

Versuche an einer motorisch befeuerten Versuchsvorrichtung haben gezeigt, dass die durch den Spalt 8 dabei abströmende Gasmenge vernachlässigbar bzw. kaum merkbar ist. Nach Abfallen des Gasdruckes bewegt sich der Dichtring 1 durch die Kraft der Feder 6 wieder in seine Ausgangslage nach Fig.5 bzw. Fig.1 zurück.

Es versteht sich, dass aufgrund des erfindungsgemässen Verfahrens zahlreiche der jeweiligen Aufgabenstellung angepasste Abdichtungen konstruktiv gestaltet werden können. Bei den häufigsten Anwendungsfällen wird die Zuströmung des abzudichtenden Mediums entlang der Dichtfläche 5 erfolgen, wie z.B. bei einer Kolbenringdichtung oder der Dichtleiste bzw. Dichtlasche einer Rotationskolbenmaschine. Für eine Kolbenringdichtung kann beispielsweise ein zusätzliches Federelement zum Abhalten des Dichtringes, bzw. Kolbenringes von der Zylinderlauffläche vermieden werden, indem dieser Ring mit entsprechend geringerem Durchmesser und durch den Gasdruck elastisch aufweitbar ausgeführt wird.

Es versteht sich auch, dass die Weite des bei abgehobenem Dichtteil verbleibenden Dichtspaltes 8 in den schematischen Darstellungen der Fig.1 bis 5 nicht massstäblich gezeigt ist, sondern sehr klein sein kann, da lediglich ein Reibungskontakt oder ein Anstossen an Unterbrechungskanten der dem Dichtteil 1 gegenüberliegenden Dichtfläche 5 zu vermeiden sind.

## Ansprüche

1. Verfahren zur Abdichtung zwischen relativ zueinander bewegten Maschinenteilen (2,3) mittels eines in einem der Maschinenteile beweglich gehaltenen Dichtteiles, bei wechselnden Drücken, dadurch gekennzeichnet, dass das bewegliche Dichtteil (1) im differenzdrucklosen Zustand mit einer begrenzten Kraft von der gegenüberliegenden Dichtfläche (5) abgehoben gehalten wird, sein Anlegen an die Dichtfläche (5) durch eine beim kurzzeitigen Durchströmen des Dichtspaltes (8) an seiner Laufseite (9) wirkende Druckverminderung und den unverminderten Druck aus dem abzudichtenden Raum (7) oder der Atmosphäre an der Schubseite (10) des Dichtteiles (1) erfolgt und sein Halten in Anlage erfolgt, bis die begrenzte Kraft grösser ist als die Druckkraft aus dem abzudichtenden Raum (7).

2. Abdichtung zwischen relativ zueinander bewegten Maschinenteilen, mit einem in einem der Maschinenteile (3) beweglich gelagerten Dichtteil (1), zur Durchführung des Verfahrens nach Anspruch 1, gekennzeichnet durch eine Einrichtung (6) zur hubbeweglichen Halterung des Dichtteiles (1) mit einer begrenzten Kraft im Abstand von der dem Dichtteil (1) gegenüber liegenden Dichtfläche (5) des anderen Maschinenteiles (2), so dass das Dichtteil (1) durch die beim kurzzeitigen Abströmen durch den Dichtspalt (8) auftretende Druckminderung an einer Seite (9) des Dichtteiles (1) und dem an der gegenüberliegenden, der Dichtfläche (5) abgekehrten Seite (10) wirkenden Druck aus dem abzudichtenden Raum (7) oder der Atmosphäre an der Dichtfläche (5) zeitweise zur Anlage gelangt.

## Claims

1. Process for bringing about a seal between two machine parts (2,3) moveable relative to one another by means of a sealing part moveably held in one of the machine parts, in the case of changing pressures, characterized in that the moveable sealing part (1) is kept raised from the facing sealing surface (5) with a limited force in the differential pressure-less state, in that the application of sealing part (1) to sealing surface (5) takes place by a pressure reduction acting on the contact side (9) of sealing part (1) when there is a brief flow through sealing gap (8) and by the unreduced pressure from the area to be sealed or the atmosphere on the thrust side (10) of sealing part (1) and in that the keeping in application takes place until the limited force exceeds the pressure force from the area to be sealed.

2. Sealing means between machine parts moveable relative to one another, with a sealing part (1) moveably held in one of the machine parts (3), for performing the process according to claim 1, characterized in that there is a device (6) for maintaining sealing part (1) with a limited force moveable for raising at a distance from a sealing surface (5) of the other machine part (2) facing sealing part (1), so that the sealing part temporarily engages on sealing surface (5) due to the pressure reduction on one side (9) of sealing part (1) occuring during the brief outflow through sealing gape (8) and the pressure from the area to be sealed or the atmosphere acting on the opposite side (10) averted from the sealing surface (5).

## Revendications

1. Procédé pour assurer l'étanchéité entre deux pièces de machine mobiles l'une par rapport à l'autre (2, 3) au moyen d'un joint maintenu de manière mobile dans une des pièces, dans le cas de pressions variables, caractérisé par le fait que le joint mobile (1) est, en cas d'absence de différence de pression, soulevé avec une force limitée de la surface pression, soulevé avec une force limitée de la surface d'étanchéité opposée (5), son application contre la surface d'étanchéité (5) se produisant sous l'action conjointe de la diminution de pression qui s'établit lors de l'écoulement momentané du fluide dans la fente (8) à sa face de glissement, et de la pression non diminuée régnant dans la chambre (7) à étancher ou de la pression atmosphérique extérieure, sur la face de poussée (10) du joint (1), le joint étant maintenu dans la position d'application jusqu'à ce que la force limitée devienne supérieure à la force de pression établie dans la chambre (7) à étancher.

2. Dispositif d'étanchéité entre deux pièces de machine mobiles l'une par rapport à l'autre, avec un joint d'étanchéité (1) monté de manière mobile dans une des pièces de machine (3), pour la mise en oeuvre du procédé suivant la revendication 1, caractérisé par un moyen (6) pour l'assujettissement à glissement, avec une force limitée, de l'élément de joint (1) à distance de la surface d'étanchéité (5) de l'autre pièce de machine (2) située vis-à-vis de l'élément de joint (2), de telle sorte que sous l'action de la diminution de pression qui s'tablit lors de l'écoulement momentané du fluide dans la fente (8), d'un côté (9) de du joint d'étanchéité (1) et sous l'action de la pression régnant dans la chambre (7) à rendre étanche ou sous l'action de la pression atmosphérique agissant sur le côté opposé (10) éloigné de la surface d'étanchéité (5), le joint d'étanchéité (1) est appliqué momentanément contre la surface d'étanchéité.

Fig.1

Fig.2

Fig.3

Fig.4

Fig.5